# EUROPEAN PATENT APPLICATION

(11) **EP 2 178 004 A1**
(43) Date of publication of application: **21.04.2010**
(21) Application number: 09173177.8
(22) Date of filing: 15.10.2009
(51) Int. Cl.: G06F 17/30

(54) **Selective history data structures**

(30) Priority: 15.10.2008 US 252336
(71) Applicant: APPLE INC., Cupertino, CA 95014 (US)
(72) Inventor: Stachowiak, Maciej, San Francisco, CA 94114 (US); Decker, Kevin, San Jose, CA 95128 (US); Sullivan, John W., Pacific Grove, CA 93950 (US); Adler, Darin, Los Gatos, CA 95030 (US); Roben, Adam, State College, PA 16801 (US); Niederauer, Chris, San Francisco, CA 94115 (US)
(74) Representative: Barnfather, Karl Jon

(57) **Abstract**

Methods and apparatuses which create and use selective history data structures are disclosed. In one embodiment, a method includes monitoring presentations accessed by a user, automatically selecting some of the presentations accessed by the user according to, at least in part, the user's access patterns, and displaying representations of the some of the presentations in a pattern of an n x n array, wherein n is greater than 1. Other methods are disclosed, and various apparatuses and machine readable media are also disclosed.

## Description

### BACKGROUND

The present invention relates to methods, such as user interfaces, for presenting selective history data structures and for using those structures.

The Internet is a global network of connected computer networks. Over the last several years, the Internet has grown significantly. A large number of computers on the Internet provide information in various forms. Anyone with a computer connected to the Internet can potentially tap into this vast pool of information. A typical user uses a browsing application (e.g., a browser) to access one or more Web pages provided by a Web server. A typical browser may be a version of Safari from Apple Inc., Internet Explorer from Microsoft Corporation, or Firefox.

In a conventional user interface of a web browsing application, a user may find a previously visited page of interest by means of a history menu - which chronologically lists all the previous pages visited in the last few days - or via a bookmarks or favorites menu if the user had the foresight to explicitly store the page in such a retrievable menu.

In the case of the history menu, the user has to remember the title or URL of the particular page in order to select it from the oftentimes cluttered menu. Alternatively, a page can be retrieved from bookmarks or favorites menu if the URL was saved previously. Bookmark menus can also require more time than necessary since these menus tend to become cluttered with time as the user adds to the collection of pages and often lack structure. Conventional browsers allow the user to create hierarchical folders within which to organize and display the bookmarks or favorites, but this operation must be done by hand for every bookmark and can involve several steps.

A need exists, particularly as history and bookmark lists become long, for a means of organizing and displaying presentations of interest to the user in a manner that quickly and clearly conveys the relative relevance of each page.

A prior user interface for dynamically managing presentations has been described in US Application 11/179,076, which was filed on July 11, 2005, and which is assigned to the assignee of the present invention. This application describes one method for reducing clutter in, for example, a web browser.

### SUMMARY OF THE DESCRIPTION

The present invention relates to methods, apparatuses, and machine readable media which manage history information, such as the history information available from most Internet browsers.

In one embodiment, a method includes monitoring presentations, such as web pages accessed by a user, and automatically selecting some of the presentations accessed by the user according to, at least in part, the user's access patterns and displaying representations of those selected some of the presentations in a pattern of an n x n array, wherein n is greater than 1. In one implementation of this embodiment, the automatically selecting operation creates a selective history data structure which may include thumbnails of a set of some of the presentations, such as thumbnails of web pages. The user's access patterns may include at least one of: (a) a metric representing a frequency of the user's access to a web page; (b) recency of user's accesses; (c) amount of user activity on a particular web page; (d) amount of time spent on the web page; and other parameters or metrics described herein.

Certain embodiments may further include obfuscating a representation which represents a web page if the web page includes a security measure, such as the use of the https protocol. Certain embodiments may further include grouping of several web pages within a domain together for determining the user's access patterns. For example, yahoo.com and finance.yahoo.com and news.yahoo.com may all be grouped together for the purpose of determining a user's access pattern such that a single representative web site from the particular domain is used in the selective history data structure rather than including all of the different web sites from the same domain. Certain embodiments may include the use of a window which contains the representations of the web sites, such as thumbnails of the web sites or web pages, and when this window is resized, the representations are also resized, which resizing may include resizing an aspect ratio (height x width) of the thumbnails or other representations of the web pages. Certain other embodiments may include the use of an indicator for a representation, which indicator indicates that the web page represented by the representation has probably changed. In one implementation, the indicator may be controlled by a subscription to a feed or publication of information, such as an RSS (Really Simple Syndication) feed or a distribution of new content. Certain embodiments may also include the updating, automatically, of the thumbnails as a background task. In this way, a user interface may show the current state of a web site or web page which is different than the state of the web page when the user last visited the page. Certain implementations of the present invention may also include determining whether a user accesses a web page in a consistent access pattern based on the time of accessing and adding the web page to the selective history data structure without regard to whether the consistent access pattern meets a threshold based on frequency of the user's access to web pages. The threshold may be based upon the frequency of accessing of other web pages, such as the ten most frequently accessed web pages.

The number of web pages in the pattern of the n by n array may be user variable that is controlled through a user control of a user interface element. The array may be displayed on one or more walls of a virtual room.

Certain embodiments of a method may include displaying an enlarged representation of one of the thumbnails in response to receiving a first command to display the enlarged representation, and displaying a currently downloaded version of the web page represented by one of the thumbnails in response to receiving a second command to download the current web page; typically, the first command is different than the second command. For example, the first command may include positioning or hovering a cursor over the thumbnail while the second command may involve "clicking" the thumbnail by positioning a cursor over the thumbnail and by depressing a button or otherwise activating a signal indicating the selection of the thumbnail. A user interface which shows 45the collection of representations, such as in a pattern of an n x n array, may be displayed concurrently while displaying the currently downloaded version of the web page which was retrieved from the thumbnail in the n x n array.

Certain embodiments may also include the provision of one or more user interface elements which allow a user to perform one of a variety of actions relative to the thumbnails or other representations in the n x n array. For example, user interface elements may be provided which allow a user to remove a representation of a web page from the pattern of the n x n array; or move a representation of a web page within the pattern of the n x n array; or fix a location of a representation of a web page within the pattern of the n x n array; or manually add a new representation to the pattern of the n x n array.

In at least certain embodiments, a method of the present invention may also include providing information, in response to a selection of a user command, about the user's access pattern for a particular web page represented in the pattern of the n x n array. This information may indicate how or why the particular web page was automatically selected for inclusion into the pattern of the n x n array.

In certain embodiments, the present invention may also include displaying in a window the pattern of the n x n array and displaying in the window a user interface element which, when selected, causes the display of a full history of web pages that have been accessed; in one implementation, the full history may be displayed in a cover flow view.

Another embodiment of the present invention may include monitoring of web pages accessed by a user, automatically selecting some of the web pages accessed by the user according to, at least in part, the user's access patterns, displaying representations which show content of some of the web pages, and obfuscating, during the displaying, a representation in the some of the web pages if the representation is for a web page which includes a security measure. The representation may be a thumbnail and the obfuscating may include one of blurring text and/or graphics or removing text or obstructing text in the web page. The obfuscating may further include displaying a translucent overlay over the obfuscated representation, and the translucent overlay indicates that the machine has intentionally obfuscated the representation. In one implementation, the translucent overlay may be the image of a lock through which the user can see an obfuscated version of the secure web site. The web site, in one implementation, may be secured through the use of the https protocol.

Other methods are also disclosed herein and various apparatuses and systems are disclosed herein which perform these methods, and various machine readable storage media are also disclosed herein which cause the execution on a machine of one or more of the methods described herein.

### BRIEF DESCRIPTION OF THE DRAWINGS

The present invention is illustrated by way of example and not limitation in the figures of the accompanying drawings in which like references indicate similar elements.

**Figure 1** is a block diagram of a network of data processing systems in which presentations, such as web pages or other document presentations, may be accessed via a browser such as a web browser.

**Figure 2** is a block diagram of a data processing system, such as a general purpose computer or a special purpose computer, or an embedded system or a cellular telephone, etc. which may be used to access a document presentation via a browser, such as a web browser or other application program.

**Figure 3A** shows an example of a user interface which includes a window displaying a 4 by 4 (4 x 4) array of representations which have been selected by the system based upon user access patterns according to one embodiment of the present invention.

**Figure 3B** shows an example of a user interface of another window of the present invention which displays a 2 by 2 array of thumbnails of web pages created from a selective history data structure according to one embodiment of the present invention.

**Figure 3C** shows an example of a user interface in which an array of curved representations is shown on a curved background or wall.

**Figure 3D** shows an example of a user interface in which two arrays of slanted representations are shown on two slanted backgrounds or walls.

**Figure 4** shows an example of a method, in flow chart form, according to one embodiment of the present invention.

**Figure 5A** shows, in block diagram form, an example of a software architecture for implementing at least certain embodiments of the present invention.

**Figure 5B** shows an example of how a thumbnail may be created from an image which is captured from a web page which is displayed within a window.

**Figure 6** shows an example of a thumbnail with certain selectable user interface elements associated with the thumbnail.

**Figures 7A** and **7B** show an example of a user interface showing how a user may manually add a web page or other presentation to a selective history data structure.

**Figures 7C** and **7D** show an example of a user interface which allows a user to rearrange thumbnails or other representations in a selective history data structure.

**Figures 8A** and **8B** show how the representations, such as thumbnails, may be resized and in doing so also resize the aspect ratios of the thumbnails or representations.

**Figures 9A, 9B** and **9C** show an example of a user interface which allows a user to either view an enlarged version of the representation of the web site which was previously collected or to download a current version of the web site which may have changed since the last time the user visited the web site.

**Figure 10** shows an example, in a flow chart view, of a method for protecting confidential information in a secure web page by obfuscating the content of the web page when it is displayed in a selective history window.

**Figure 11** shows an example of a method, in flowchart form, of performing an analysis of the user's access patterns, wherein the analysis groups together related URLs as described herein according to one embodiment of the present invention.

**Figure 12** shows an example of how a full history or a selective history may be displayed in a cover flow view.

**Figures 13A** and **13B** show an example of a user interface in which a user interface displaying a selective history data structure can be kept available or visible to a user while browsing pages obtained from the selective history data structure, such as by selecting a thumbnail within the selective history data structure.

**Figure 14** shows an example of a method, according to one embodiment, which uses an RSS feed to provide an indication that a particular web page has probably changed since the user's last visit to the web page or since the last thumbnail for the web page was created.

**Figure 15** shows an example according to one embodiment of the present invention in which a web site may be added to a selective history data structure based upon a sufficiently consistent access pattern.

### DETAILED DESCRIPTION

Various embodiments and aspects of the inventions will be described with reference to details discussed below, and the accompanying drawings will illustrate the various embodiments. The following description and drawings are illustrative of the invention and are not to be construed as limiting the invention. Numerous specific details are described to provide a thorough understanding of various embodiments of the present invention. However, in certain instances, well-known or conventional details are not described in order to provide a concise discussion of embodiments of the present inventions.

Reference in the specification to one embodiment or an embodiment means that a particular feature, structure or characteristic described in connection with the embodiment is included in at least one embodiment of the invention. The appearance of the phrase "in one embodiment" in various places in the specification do not necessarily refer to the same embodiment.

Throughout this description, the history menus found on a generic computer-based Internet web browser will be used as exemplary contexts within which to illustrate the different aspects of the present invention. However, such contexts and technologies should not be construed as restricting the scope of the invention. Web browsers are graphical (visual) user interfaces that manage and display web pages (HTML documents). The present invention is not limited to web browsers, textual or visual presentations. The methods described in the following claims pertain to all manner of presentations, be they visual, audio, or of any other kind interpretable by the senses.

Exemplary embodiments of the present invention provide features which may be used to augment the capabilities of conventional history and bookmarks/favorites menus found in most Internet browsers. One aspect of the invention refers to the automatic recording of selected presentations accessed by the user and the ranking thereof based on user access patterns (for example, frequency of access to a given presentation). In an aspect of the invention, this feature could be used to provide a selective history in an n x n array and improve the relevance of the pages stored therein, by allowing for the automatic recording of only selected presentations based on user patterns (such as, for example, frequency or recency of access). In one embodiment, this selective history user interface may be referred to as a "Top Sites" User Interface.

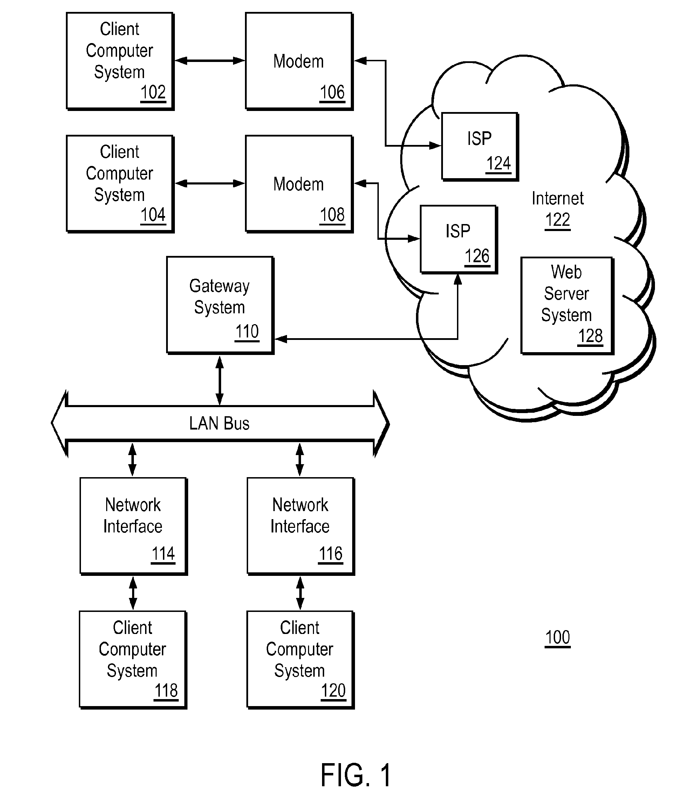

**Figure 1** is a diagram of a network computer system in which a web browser with history and bookmark menus incorporating the methods of the invention may be used, according to one embodiment of the present invention. As shown in **Figure 1**, a network 100 includes a number of client computer systems or other types of data processing systems that are coupled together through an Internet 122. It will be appreciated that the term "Internet" refers to a network of networks. Such networks may use a variety of protocols for exchange of information, such as TCP/IP, ATM, SNA, SDI, etc. The physical connections of the Internet and the protocols and communication procedures of the Internet are well known to those in the art. It will be also appreciated that such system may be implemented in an Intranet within an organization.

Access to the Internet 122 is typically provided by Internet service providers (ISPs), such as the ISP 124, and the ISP 126. Users on client systems, such as the client computer systems 102, 104, 118, and 120, generally obtain access to the Internet through Internet service providers, such as ISPs 124 and 126. Access to the Internet may facilitate transfer of information (e.g., email, text files, media files, etc.) between two or more digital processing systems, such as the client computer systems 102, 104, 118, and 120 and/or a web server system 128. For example, one or more of the client computer systems 102, 104, 118, and 120 and/or the web server 128 may provide document presentations (e.g., a web page) to another one or more of the client computer systems 102, 104, 118, and 120 and/or web server 128. For example, in one embodiment of the invention, one or more client computer systems 102, 104, 118, and 120 may request to access a document that may be stored at a remote location, such as the web server 128. In the case of remote storage, the data may be transferred as a file (e.g., download) and then displayed (e.g., in a window of a browser) after transferring the file. In another embodiment, the document presentation may be stored locally at the client computer systems 102, 104, 118, and/or 120. In the case of local storage, the client system may retrieve and display the document via an application, such as a word processing application, without requiring a network connection.

The web server 128 typically includes at least one computer system to operate with one or more data communication protocols, such as the protocols of the World Wide Web, and as such, is typically coupled to the Internet 122. Optionally, the web server 128 may be part of an ISP which may provide access to the Internet and/or other network(s) for client computer systems. The client computer systems 102, 104, 118, and 120 may each, with appropriate web browsing software, access data, such as HTML documents (e.g., web pages), which may be provided by the web server 128. The browsing software may include history user interfaces further incorporating the methods of the present invention in accordance with one embodiment of the invention, to allow a user to manage the recording, organizing and display of presentations in a manner that reflects their relevance to the user.

The ISP 124 provides Internet connectivity to the client computer system 102 via a modem interface 106, which may be considered as part of the client computer system 102. The client computer systems 102, 104, 118, and 120 may be a conventional data processing system, such as a Power Mac G4 or iMac computer available from Apple Inc., a "network" computer, a handheld/portable computer, a cell phone with data processing capabilities, a TV browser system, such as Web TV system, an embedded system, a consumer electronic device, or other types of digital processing systems (e.g., a personal digital assistant (PDA)).

Similarly, the ISP 126 provides Internet connectivity for the client computer systems 102, 104, 118, and 120. However, as depicted in **Figure 1**, such connectivity may vary between various client computer systems, such as the client computer systems 102, 104, 118, and 120. For example, as shown in **Figure 1**, the client computer system 104 is coupled to the ISP 126 through a modem interface 108, while the client computer systems 118 and 120 are part of a local area network (LAN). The interfaces 106 and 108, shown as modems 106 and 108, respectively, may represent an analog modem, an ISDN modem, a DSL modem, a cable modem, a wireless interface, or other interface for coupling a digital processing system, such as a client computer system, to another digital processing system. The client computer systems 118 and 120 are coupled to a LAN bus 112 through network interfaces 114 and 116, respectively. The network interface 114 and 116 may be an Ethernet-type, asynchronous transfer mode (ATM), or other type of network interface. The LAN bus is also coupled to a gateway digital processing system 110, which may provide firewall and other Internet-related services for a LAN. The gateway digital processing system 110, in turn, is coupled to the ISP 126 to provide Internet connectivity to the client computer systems 118 and 120. The gateway digital processing system 110 may, for example, include a conventional server computer system. Similarly, the web server 128 may, for example, include a conventional server computer system.

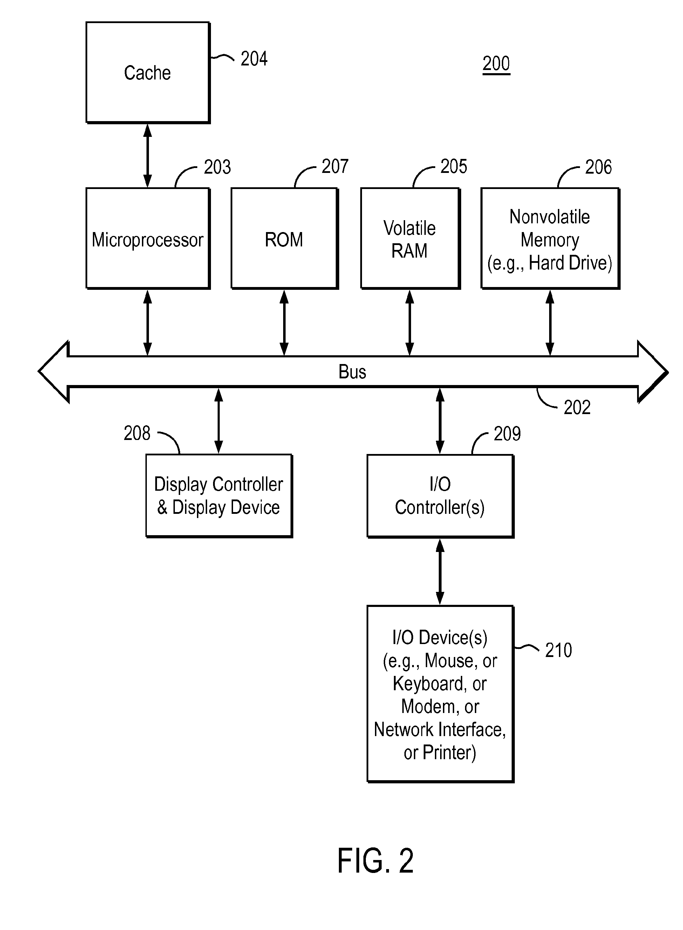

**Figure 2** is a block diagram of a data processing system which may be used with one embodiment of the invention. For example, the system 200 shown in **Figure 2** may be used as a client computer system (e.g., the client computer systems 102, 104, 118, and/or 120), a web server system (e.g., the web server system 128), or a conventional server system, etc. Furthermore, the digital processing system 200 may be used to perform one or more functions of an Internet service provider, such as the ISP 124 and 126.

Note that while **Figure 2** illustrates various components of a computer system, it is not intended to represent any particular architecture or manner of interconnecting the components, as such details are not germane to the present invention. It will also be appreciated that network computers, handheld computers, cell phones, embedded systems, consumer electronic systems, and other data processing systems which have fewer components or perhaps more components may also be used with the present invention. The computer system of **Figure 2** may, for example, be an Apple Macintosh computer.

As shown in **Figure 2**, the computer system 200, which is a form of a data processing system, includes a bus 202 which is coupled to a microprocessor 203 and a ROM 207, a volatile RAM 205, and a non-volatile memory 206. The microprocessor 203, which may be a PowerPC G3, PowerPC G4 or PowerPC G5 microprocessor from Motorola, Inc. or IBM, is coupled to cache memory 204 as shown in the example of **Figure 2**. The bus 202 interconnects these various components together and also interconnects these components 203, 207, 205, and 206 to a display controller and display device 208, as well as to input/output (I/O) devices 210, which may be mice, keyboards, modems, network interfaces, printers, and other devices which are well-known in the art. Typically, the input/output devices 210 are coupled to the system through input/output controllers 209. The volatile RAM 205 is typically implemented as dynamic RAM (DRAM) which requires power continuously in order to refresh or maintain the data in the memory. The non-volatile memory 206 is typically a magnetic hard drive, a magnetic optical drive, an optical drive, or a DVD RAM or other type of memory system which maintains data even after power is removed from the system. Typically the non-volatile memory will also be a random access memory, although this is not required. While **Figure 2** shows that the non-volatile memory is a local device coupled directly to the rest of the components in the data processing system, it will be appreciated that the present invention may utilize a non-volatile memory which is remote from the system, such as a network storage device which is coupled to the data processing system through a network interface such as a modem or Ethernet interface. The bus 202 may include one or more buses connected to each other through various bridges, controllers, and/or adapters, as is well-known in the art. In one embodiment, the I/O controller 209 includes a USB (Universal Serial Bus) adapter for controlling USB peripherals.

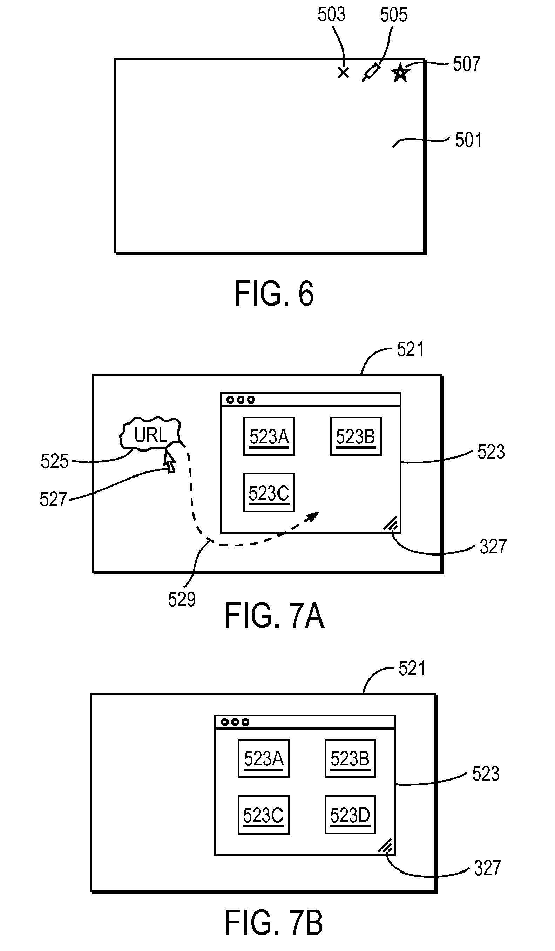

In at least certain embodiments of the present invention, representations of a presentation, such as thumbnails of a web site or web page, may be displayed in a pattern of an array such as an n x n array. The presentation may be a single static item or an item which changes over time (such as a movie or slide show). The array may be displayed on what appears to be a three-dimensional surface such as one or more of the walls of a room or a curved wall or other surfaces. The array may have any one of a variety of two-dimensional shapes, such as a rectangle or trapezoid or convex polygonal shape; the examples provided herein show a rectangular array which has a pattern defined by n x n positions in the array. It will be understood that the pattern of an n by n array may not be completely filled in but it will still be considered a pattern of an n x n array; an example of such a pattern which is not completely filled in is shown in **Figure 7A** which shows a two by two array which is not yet completely filled in.

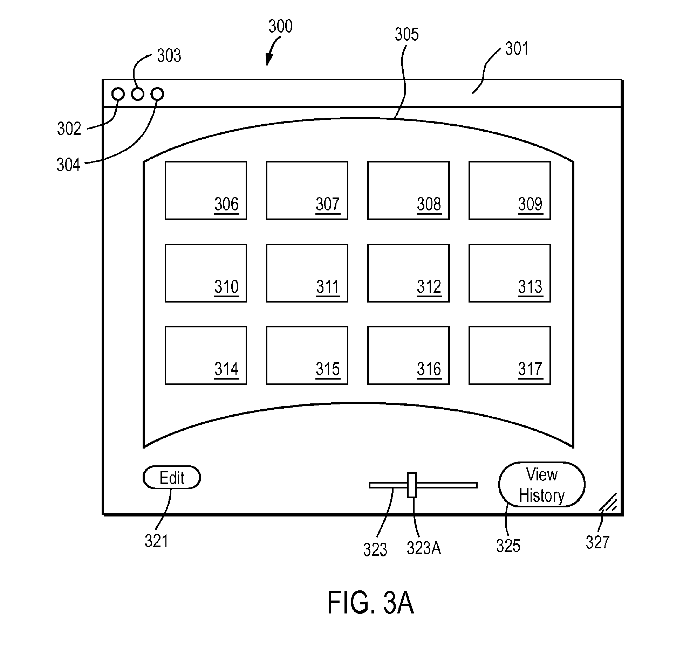

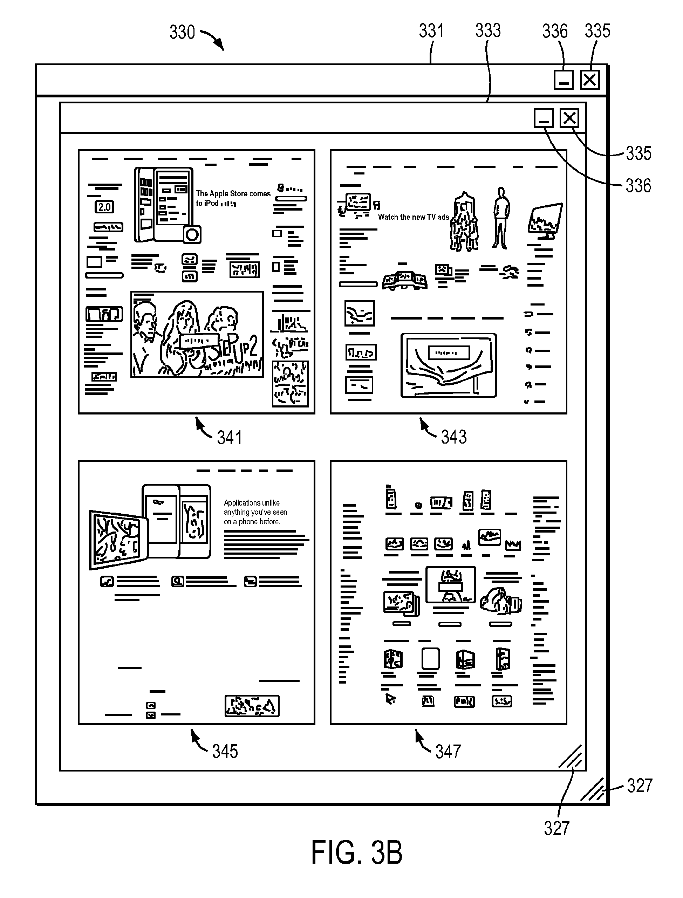

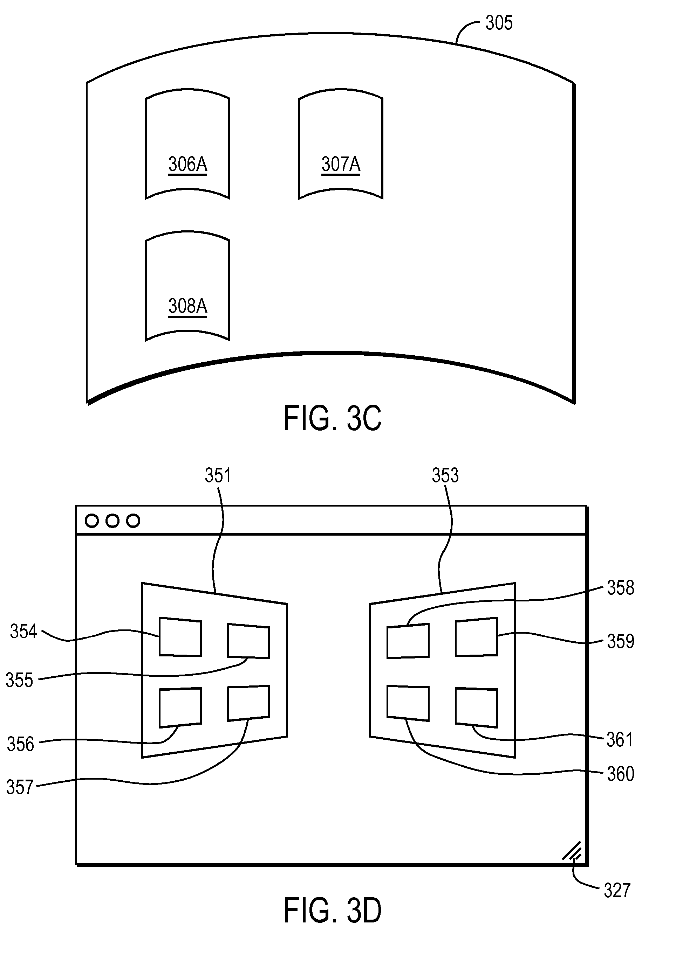

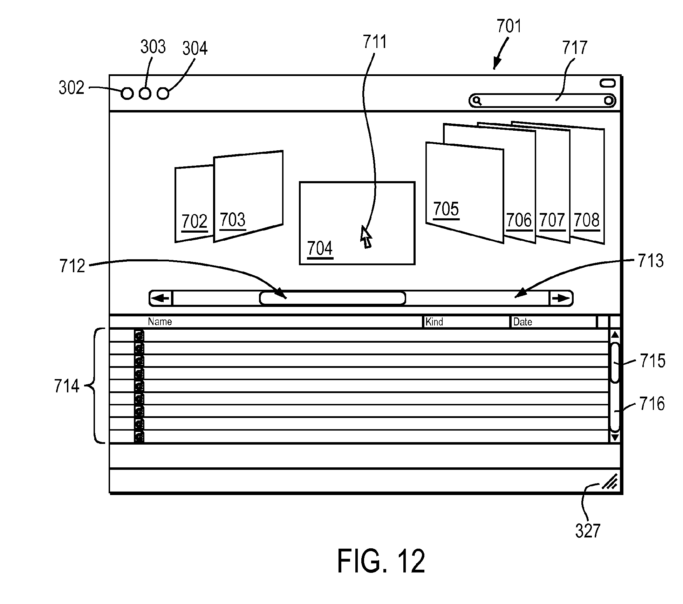

In the example shown in **Figure 3A**, a 4 by 4 array of representations, such as thumbnails, is shown on a curved wall surface 305 within a window 300 which includes a title bar 301. The representations may be flat, as shown, or curved as shown in Figure 3C. The window 300 also includes several user interface elements which allow the user to control the window, such as a close button or user interface element 302, a minimize button or user interface element 303, and a maximize button or user interface element 304; these user interface elements 303, 302, and 304 are known in the art. The window 300 also includes a corner user interface element 327 which may be controlled by the user to resize the window 300 as is known in the art. The title bar 301 may include a title for the window, such as "Top Sites" or other names indicating that the presentation of representations on the surface 305 is a selective history or selective history data structure which, according to at least certain embodiments of the invention, are automatically selected by the data processing system based upon the user's access patterns of the presentations, such as web pages or web sites. The representations 306-317 may each be thumbnails showing a miniaturized version of each web site or some of the representations may be thumbnails and the other representations may be a standard icon with a name or label. The window 300 may be a window in a web browser program such as Internet Explorer, Safari from Apple Inc., Firefox, etc. The window 300 may be invoked from a pull-down menu or a button on a menu bar within a web browser program, or in other manners. The surface 305 may be a single wall or curved wall or multiple walls in a virtual room. The window 300 may also include other user interface elements to allow the user to control the presentation of the thumbnails or other representations of the presentations, such as web pages. For example, a view history button 325 may be a selectable user interface element which the user may select, thereby causing the display of a full history of all presentations, such as web pages which the user has accessed. This full history presentation may be a conventional list presentation as appears in a typical web browser application through the selection of a history menu or it may be a presentation of the items in the history in a cover flow view such as the cover flow view shown in **Figure 12**; further information about cover flow views may be obtained from U.S. Patent Application No. 11/760,759 filed on June 9, 2007. Alternatively, the full history view may be an array of icons representing each visited web page, without thumbnails for the web pages. The user may be able to toggle between the full history view (which may show hundreds of web pages which were visited) and the selective history view (which may show only the 10 or 20 most visited web pages), such as the selective history view shown by the representations 306-317 in **Figure 3A**. A slider user interface element 323 may also be provided to allow for the number of representations in the pattern of the n x n array to be changed. In the example shown in **Figure 3A**, the array is a 4 by 4 array, and the number n may be changed by moving the knob user interface element 323a to the left or to the right from the current position shown in **Figure 3A**. Moving the knob 323a to the left decreases the number, while moving the knob 323a to the right increases the number of representations shown. For example, moving the knob 323a to the left can cause the display of a 2 by 2 array, such as the array shown in **Figure 7B** or the array shown in **Figure 3B**. The edit button or user interface element 321 may also be included in the user interface of the window 300. This button may allow the user to edit the array by performing various editing operations, including removing representations, rearranging the representations, banning a representation from appearing in the array, adding the user's own representation outside of any automatically implemented algorithms described herein, fixing the location of a particular representation within the array, or obtaining information about why a particular representation was selected to be presented in the selective history, such as information indicating the user's access pattern with respect to the particular web page represented by the representation.

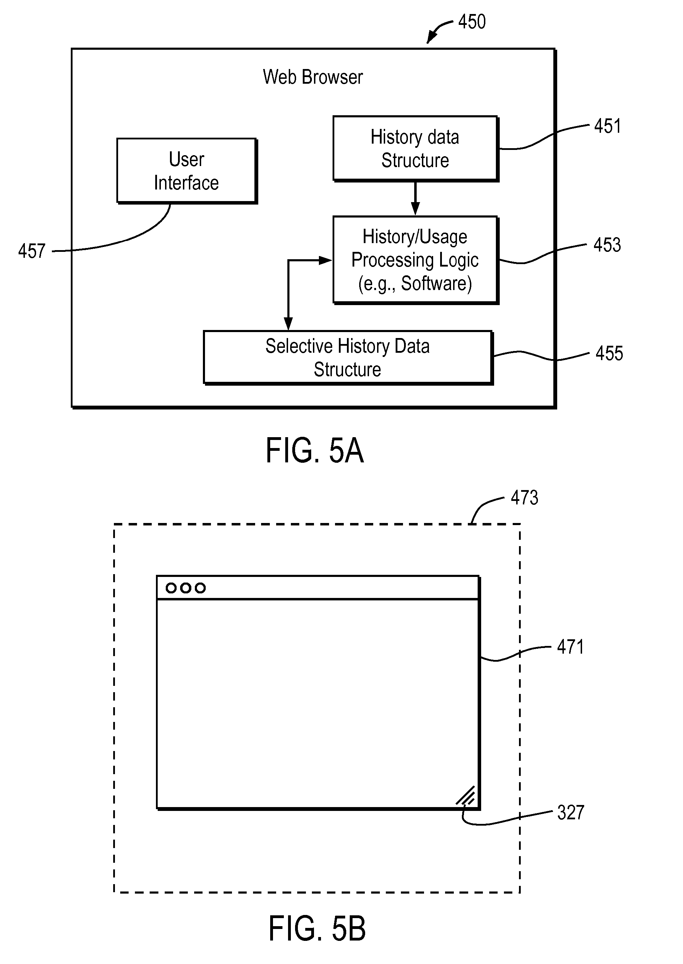

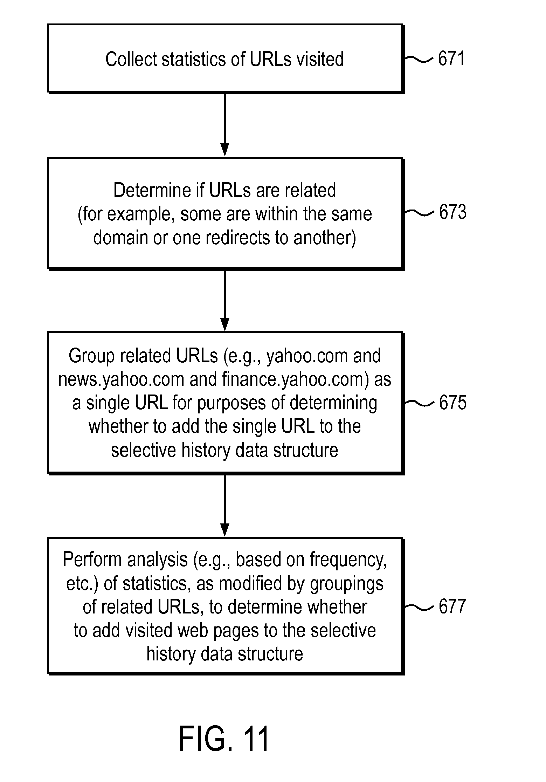

**Figure 3B** shows a specific example of actual thumbnails which are used as representations of actual web pages visited by a user with sufficient frequency or other metrics of user access patterns to cause the system to add each of the thumbnails to a selective history data structure, which may be considered a "Top Sites" view of the user's browsing habits. In the particular array shown in **Figure 3B**, the number of such web pages is limited to 4 since the array is a 2 by 2 array, but it will be appreciated that the system may collect sufficient data with respect to the entire browsing activity of a user that the array may be populated with many more representations or thumbnails of web sites or web pages visited by the user (e.g. the Top Sites view may show a 10 x 10 array of thumbnails). The thumbnails 341, 343, 345, and 347 are each miniature versions of the actual content of the web page visited by the user. These thumbnails are shown as flat rectangles on a flat background or wall. The representations or thumbnails may be of web pages in the same domain as in the case of **Figure 3B** or different domains if the method shown in **Figure 11** is implemented in a particular embodiment. The user interface 330 includes two windows 331 and 333. The window 331 may be a typical web browser window which shows a web page which the user has navigated to, and the window 333 shows the current status of the top sites or selective history data structure for the user which is generated through the methods described herein which include the automatic selection of some of the web sites or presentations accessed by the user, wherein the selection is based upon, at least in part, the user's access patterns. This automatic selection is described further below in connection with **Figure 5A** which presents one embodiment for performing this automatic selection. The windows 331 and 333 can include conventional window controls, such as the corner user interface element 327 and other user interface elements for closing or minimizing windows such as the minimize user interface element 336 and the close user interface element 335.

**Figures 3C** and **3D** show other examples of representations, such as thumbnails of web pages, on a background or wall which is not flat. In the case of the user interface shown in **Figure 3C**, the curved wall surface 305 resembles a virtual curved wall or background on which the curved representations or thumbnails 306a, 307a and 308a are attached. The content of each of the thumbnails is also curved in the same manner (e.g. effective radius of curvature) as the curved wall surface 305. Conventional image processing algorithms may be used to present the curved thumbnails by processing the original content to produce the curved thumbnail. In the case of the user interface shown in **Figure 3D**, the slanted surfaces 351 and 353 may represent a perspective view of the walls of a virtual room; the edges of a wall which are closer to the viewer appear larger than the edges of the wall which are farther from the viewer. Slanted representations 354-361 are shown attached to the slanted surfaces 351 and 353. The content of each of these representations 354-361 is also slanted in the same manner as the slanted surfaces 351 and 353. Hence a thumbnail's edge which is closer to the viewer appears longer than the thumbnail's edge which is farther from the viewer. Conventional image processing algorithms may be used to present the slanted representations 354-361 by processing the original content to produce the slanted thumbnails.

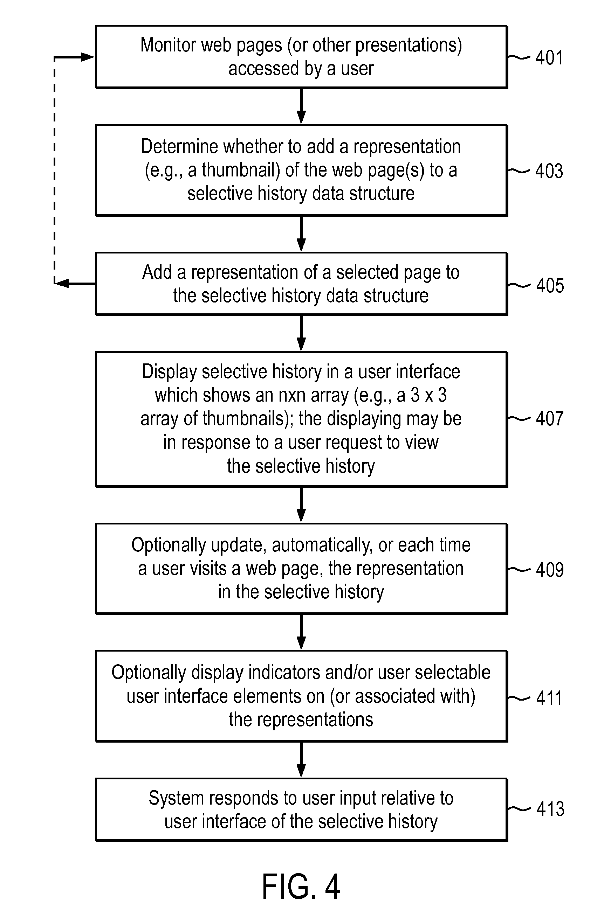

**Figure 4** shows a method which can be performed according to one embodiment of the present invention. It will be understood that **Figure 4** is an example and that fewer or more operations may be performed and that the order of the operations may be different from that shown in **Figure 4**. It will also be understood that, at least in certain embodiments, the method of **Figure 4** is performed locally at the user's data processing system rather than at a remote server and the results of the processing are stored locally and the presentation/display of the user interface showing the n x n array is also performed locally at the user's data processing system. The method may begin in operation 401 in which a data processing system used by the user monitors the web pages accessed by the user. In other embodiments, other types of presentations may be monitored, such as word processing files, spreadsheet files, PDF files, slide files, movie files, audio files, other files or a combination of such files and other files accessed by the user. The system may maintain frequency or histogram data with respect to the number of times a page or presentation is presented to the user. There are various metrics which may be used to determine a user's access pattern, including frequency of visits to a particular web page, the time spent on a web page, the activities (e.g. clicking) on a particular page, whether the page has been marked as a bookmark or favorite or marked as a snapback, or the recency of visits to the page, etc. An example of a particular algorithm is provided below in conjunction with the discussion of **Figure 5A**. Further information with respect to an implementation according to certain embodiments is also provided in U.S. Application No. 11/179,076, filed on July 11, 2005. The system and operation 403 can determine, based on the statistics and other algorithms used to determine the user's access patterns, whether to add a representation, such as thumbnail of a web page or other presentation, to a selective history data structure. This operation will typically be performed automatically in a background manner without any user interaction; in certain embodiments, the user may be given the option of turning off this capability, but if it is turned on, the monitoring operation 401 and the determining operation 403 can occur automatically as a background processing task along with operation 405 in which a representation of a selected page is added to the selective history data structure, such as a top sites user interface. The dashed line from operation 405 to operation 401 indicates that the data processing system can perform operations 401, 403, and 405 repeatedly in a cycle over time as the user browses through various web pages. In doing so, the data processing system can build up, over time, a collection of representations, in the selective history data structure, which can be displayed in any one of a variety of different manners, including the n x n array described herein. It will be understood that, in at least certain embodiments, the display of the selective history may be provided in a different format other than an n x n array, such as a conventional n x 1 list. In operation 407 of the method shown in **Figure 4**, the data processing system displays a selective history in a user interface which shows an n x n array, such as a 3 x 3 array of thumbnails. This displaying may be in response to a user request to view the selective history. The user request may be the selection of an option from a pull-down menu or the selection of a button on a menu bar, etc. This user interface which shows an n x n array may be, for example, the user interfaces shown in **Figures 3A****,** **3B****,** **7A****,** **8A****,** **9A**, and **13A**. The user interface which shows the array may include various user interface elements to allow the user to manipulate or interact with the array, thereby causing the system to perform operations, such as operation 413, which responds to the user input relative to the user interface of the selective history. For example, the user may remove a representation or pin or fix the location of the representation or add a representation or change the size of the window (and thereby change the size of the representation in at least certain embodiments), or change the size of the array, etc.

The method of **Figure 4** may also include optional operations, such as operations 409 and 411. In operation 409, the data processing system may automatically update a representation in the selective history. For example, the data processing system may, as a background task, automatically update a thumbnail of a web page to obtain the current appearance of the web page. This may be performed either periodically or based upon a time interval specified by the user. The system may perform this automatic update only when network activity is at an idle state or low state rather than during high network activity, such as when the user is downloading a web page or is otherwise using network resources to move data to and from the user's data processing system. The updating may also be performed each time the user visits the same web page which has a representation or thumbnail in the selective history. Operation 411 displays indicators and/or user selectable user interface elements on, or associated with, the representations, such as the thumbnails of the web pages. Examples of these indicators and/or user selectable user interface elements are shown in **Figure 6**. The indicator may, for example, indicate that the content of the web page represented by the representation may have changed since the last visit by the user to that web page.

One or more embodiments described herein may be implemented in software which is executed on a data processing system, such as a general purpose computer or an embedded device or a cellular telephone or a handheld computer or an embedded system. The software may be incorporated in a web browser which includes conventional web browsing processes and tasks. The software may be stored in a machine readable storage medium which stores and provides the executable instructions used by the data processing system to cause the data processing system to perform the one or more methods described herein. **Figure 5A** shows an example of a software architecture for a web browser 450. The web browser includes a history/usage processing logic 453. This processing logic 453 provides the processing which performs the automatic selection of the web sites to provide a selective history rather than a full history which is conventionally provided by a history menu in a web browser. The full history can be maintained in a data structure, such as the history data structure 451, which may exist as a file separate from the web browser software. The processing logic 453 performs the monitoring of the presentations accessed by the user and performs the automatic selection of some of the presentations, such as web pages accessed by the user; the automatic selection process involves, at least in part, an analysis of the user's access patterns. This automatic selection creates the selective history data structure 455 which then can be displayed through user interface software 457. It will be appreciated that, in at least certain embodiments, additional software components may be used, such as software which provides support for RSS feeds. An example of how the processing logic can perform the automatic selection to create the selective history is provided in the following description.

The following example is one method of performing an automatic selection of web pages or web sites in order to create a selective history, such as a "top sites."
1. Collect all URLs visited by the user from a history (e.g. history data structure 451) or other sources; the URLs visited include a visit count (e.g. www.cnn.com, visited 50 times).
2. Collect the sets of all URLs that have the same host name (e.g. they are in effect from the same site, such as www.cnn.com and www.cnn.com/tech); operations 673 and 675 in Figure 11 provide examples of such URLs and how they can be grouped.
3. Sort the URLs visited by the user from highest to lowest visit count.
4. Starting with the most visited URL, apply the following operations, in the following order, to each URL:
   (4a) check if a URL from the same site as the current URL has already been added to top sites; if so, skip this URL;
   (4b) otherwise, consider the current URL in the list to be the current candidate URL;
   (4c) for each URL on the same site as the current candidate URL, if it is shorter in length but has at least, for example, half as many visits, make it the current candidate URL;
   (4d) add the final current candidate URL to the end of the selective history list so far;
   (4e) go to the next URL in the sorted history list and continue the operations (4a) through (4e) starting with (4a) until the desired number of sites for the selective history has been collected.

There are variations of this method which can involve using a different initial sort (in operation 3 above); instead of having an initial sort being based solely on visit count, the initial sort could also use one or more of the following factors: (A) time and date of most recent visit; (B) time and date of multiple recent visits; (C) whether the URL is bookmarked; (D) whether a URL was visited by typing the URL, using a bookmark or following a link; (E) whether a URL was visited automatically via redirection or being loaded in a subframe (rather than a direct visit or loading a "genuine" visit).

Thumbnails of web pages or other presentations are useful because they provide immediate visual input to a user as to the content of the web page. These thumbnails may be created in a manner which provides variable resolution thumbnails and also thumbnails having different aspect ratios by utilizing an original captured image which is both high resolution and larger than the original window seen by the user when the web page was last visited. The high resolution image captured at this point in time can then be scaled and resized to provide a relatively high fidelity representation of the web page. **Figure 5B** shows one embodiment in which the web page 473 is captured for the purpose of creating thumbnails. The web page 473 is larger than the view provided by the window 471. The user may need to scroll within the window to see the full content of the web page. Rather than merely capturing the portion of the web page shown within the window 471, at least certain embodiments of the present invention capture the entire web page 473. This image capture may be in any one of a variety of image formats, such as PNG or JPG or TIFF, etc. In at least certain embodiments, the image capture format is one that allows for resizing of a thumbnail as the window displaying the selective history is resized and also allows for resizing which changes the aspect ratio of the thumbnail. While thumbnails are useful representations of web pages or other presentations, it will be appreciated that, in other embodiments, other types of representations may be used such as a standard icon which includes a name indicating the name of the web site or presentation, etc.

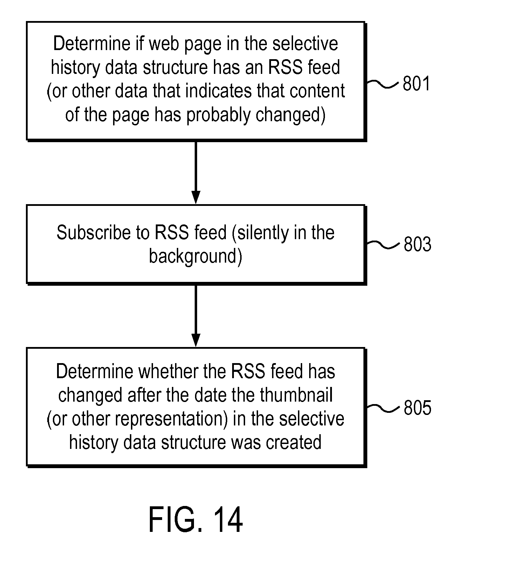

**Figure 6** shows an example of a representation used in a selective history, such as the selective history shown in **Figure 3A**. The representation 501 may be a thumbnail or other type of representation. In addition to the representation, the user interface for the representation includes several user interface elements, including selectable user interface elements 503 and 505 and the indicator 507. The user interface element 503 represents a remove or ban button which the user can use to remove the representation from the selective history. In at least certain embodiments, the removal of a representation, in effect, bans that web page from appearing in the selective history until the selective history is reset or cleared. In other embodiments, the removal may be a temporary removal, and the web page may reappear if the user continues to access the web page over time. The user interface element 505 allows the user to fix or pin the location of the representation 501 relative to the other representations in the display of the selective history. For example, if the user selects the user interface element 505, then that particular representation will remain fixed either at that point in the pattern of the n x n array or fixed relative to the order of the other representations within the array. The indicator 507 may be used to tell the user that the web page represented by the representation 501 may have changed since the user last visited the web page or since the web page was last updated by the system (e.g. automatically updated as in operation 409 shown in **Figure 4**). An example of a method which can provide this indicator is provided in **Figure 14** which is described further below.

**Figures 7A** and **7B** show an example of how a user can add to the selective history; the example shown in **Figures 7A** and **7B** involves a drag and drop operation, but other user interfaces may be provided, such as a selection of a thumbnail and then a selection of a paste command to paste the selected thumbnail. The addition of a particular presentation selected by the user forces the system to add the representation to the selective history data structure even though the web page does not satisfy the metrics with respect to sufficient frequency, etc. which the system would normally require before adding a representation of the web page or other presentation to the selective history data structure. The user may select a URL or a web page displayed within a web browser window or a hyperlink and drag and drop that selected object into the selective history window 523 shown on the desktop 521. The drag and drop operation is indicated by the dashed curve 529. In one embodiment, the user may position the cursor 527 over a URL 525 and drag and drop that URL into the window of the selective history. This causes the addition of the representation 523D to the three other representations 523a, 523b, and 523c shown within the selective history window 523. It will be appreciated that other user interface elements, such as the view history button 325 and the slider user interface element 323 and the edit button 321 may also be included within the selective history window 523.

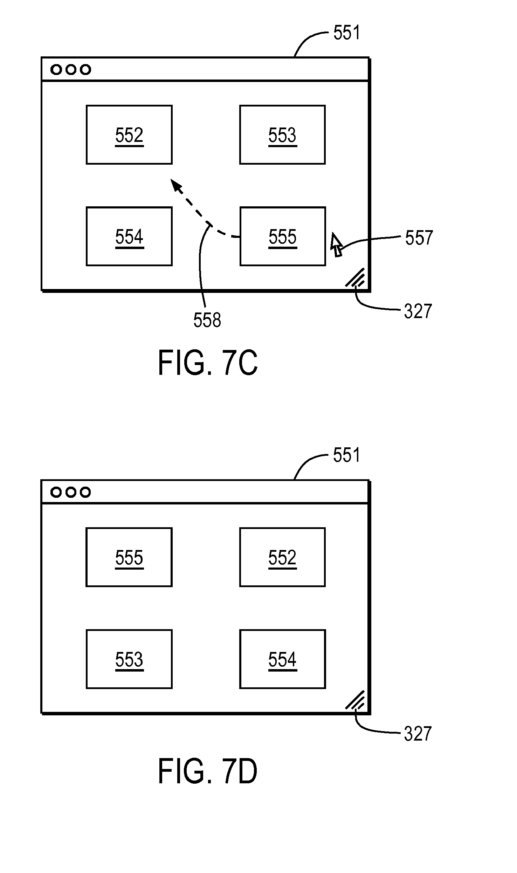

**Figures 7C** and **7D** show an example of how, through a drag and drop operation in one embodiment, the representations may be rearranged within a selective history window, such as the selective history window 551. Other user interface techniques, such as select and paste, may also be used to rearrange the representations. The user may position a cursor 557 on or near the representation 555 and drag and drop that representation, as indicated by the curve 558, to a different position in order to rearrange the representations 552, 553, 554, and 555. It can be seen, by comparing the arrangement of the representations 552-555 between **Figures 7C** and **7D** that the user has rearranged the representations, which may be thumbnails of web pages.

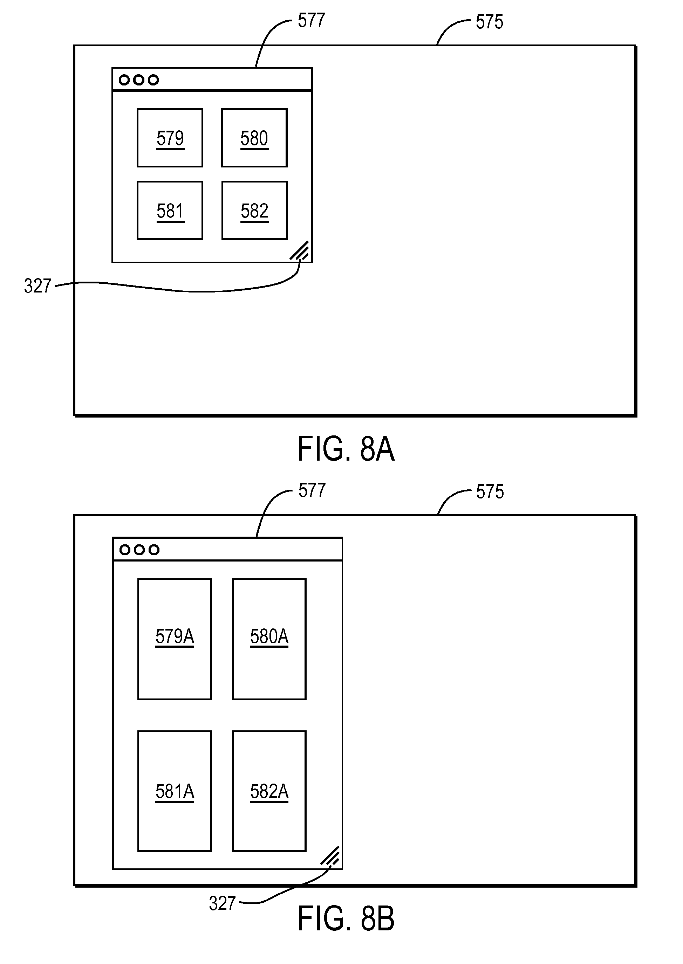

**Figures 8A** and **8B** illustrate one method for allowing the resizing of the representations, such as thumbnails, of web pages or other presentations. **Figure 8A** and **8B** show a desktop 575 on which a selective history window 577 is displayed. Thumbnails or other representations 579-582 are shown within the window 577 of **Figure 8A**. The selective history window 577 may be similar to the selective history window 300 shown in **Figure 3A** or the selective history window 333 shown in **Figure 3B**. The user may change the size of the window 577 by selecting the corner user interface element 327 and dragging the selected comer; this technique of changing a window's size is known in the art. In response to changing the window's size, the representations, in one embodiment, also change their size. By virtue of using, in at least certain embodiments, an original which is larger than the window, such as window 471, it is possible to provide a high fidelity thumbnail which can be resized without losing significant image fidelity. The resizing operation shown in **Figures 8A** and **8B** shows that the aspect ratio, in addition to the size of the representations, can be changed, resulting in the representations 579a, 580a, 581a, and 582a. In one embodiment, the resizing may show additional content; in other words, the thumbnail 579a may show more content than the thumbnail 579. In other implementations, the same content may be shown but with a different scaling factor.

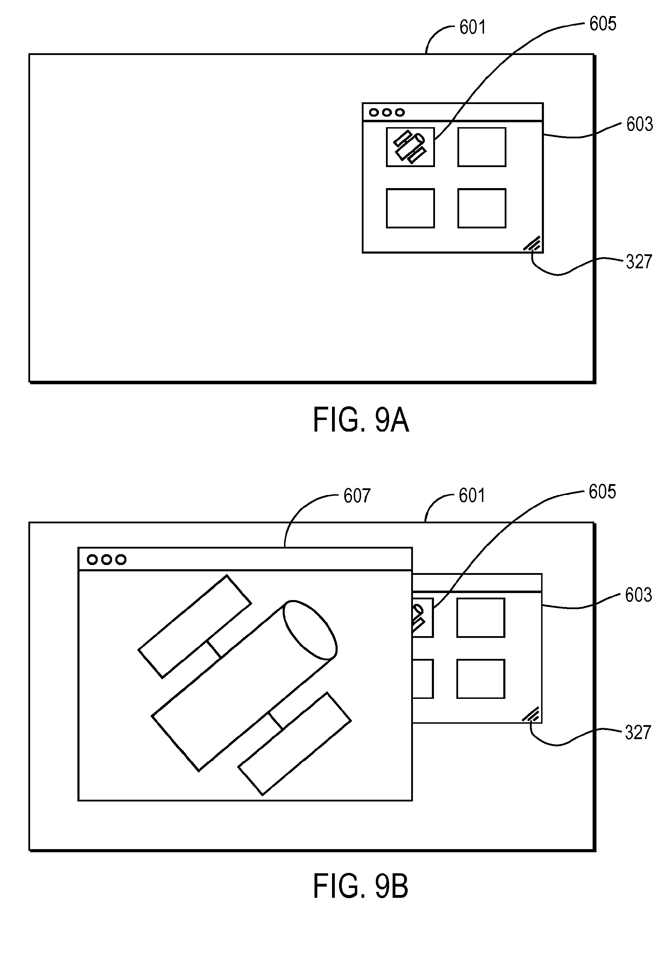

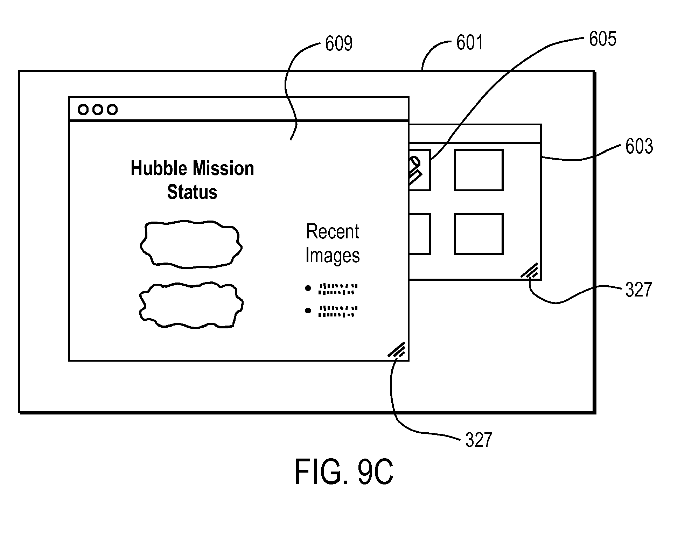

**Figures 9A, 9B** and **9C** show an example of a user interface which allows a user to obtain either an enlarged version of a representation, such as a thumbnail, or obtain the current version of the web page or other presentation represented by the representation. The selection between these two displays can occur by the user's use of two different commands, a first command and a second command. The first command may be expressed by the user hovering a cursor over a particular thumbnail and the second command may occur by the user selecting the thumbnail by clicking on the thumbnail or performing another type of selection operation. Alternatively, the first command may be a tap of a finger on the thumbnail and the second command may be a touch and hold of the finger on the thumbnail. **Figure 9A** shows a desktop 601 on which a selective history window 603 is shown. A representation of a web page in the selective history is shown as thumbnail 605 along with other representations in an array which is a 2 by 2 array. The thumbnail 605 shows the appearance of the web page based upon either the last visit to the web page by the user or the last update performed automatically by the system (e.g. as in operation 409). In the case of this example shown in **Figures 9A-9C**, the image of the web page is not current because the web page has changed as shown in **Figure 9C**. The user can use the first command, such as hovering a cursor over the thumbnail 605, to display an enlarged view of the thumbnail in the window 607. Hence, the window 607 merely displays an enlarged view which may be generated directly from the original image capture of the web page as depicted in **Figure 5B** (showing the full resolution web page 473). The enlarged view of the representation or web page previously captured allows the user to see finer details on the web page; however, because the web page may have changed, the user may not be seeing the current content of the web page. The user can see the current content by using the second command to cause the retrieval and display of the currently downloaded version of the web page represented by the thumbnail 605. In one embodiment, the second command is a click command in which the user positions a cursor over the thumbnail 605 and presses a button, such as a mouse's button, or otherwise selects the thumbnail (e.g. by touching the thumbnail with a long touch versus a short touch in time). **Figure 9C** shows the window 609 which includes the current web page represented by the thumbnail 605. Upon accessing the current web page as shown in **Figure 9C**, the system may automatically update the thumbnail 605 to show the current web page so that the next time the user accesses the selective history window, the last downloaded web page will be used for the thumbnail or other representation.

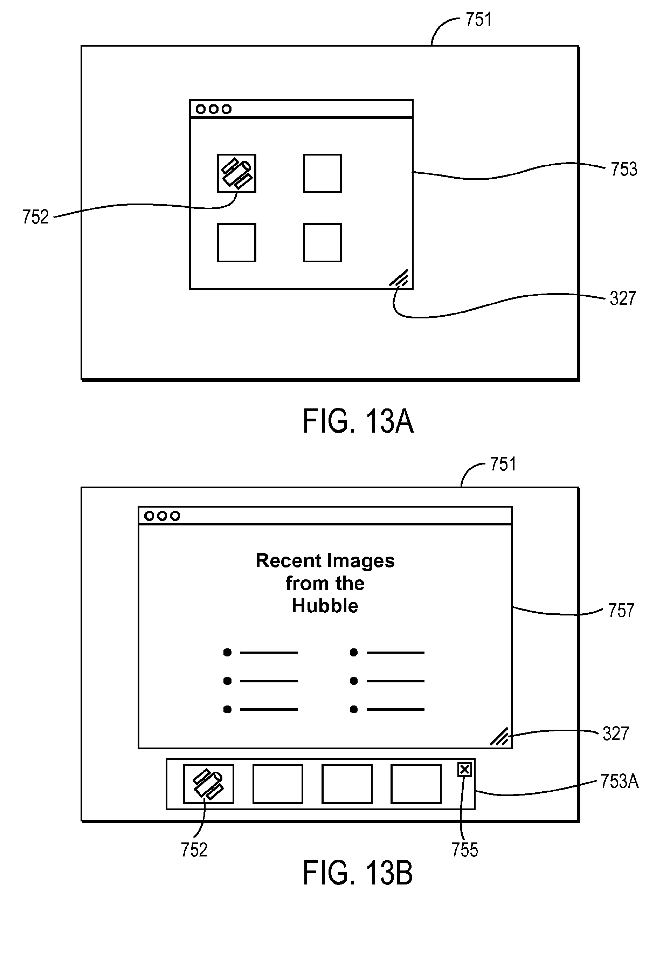

**Figures 13A** and **13B** show another aspect of the use of the selective history window. In this aspect, the selective history window is not removed when the user requests that a current version of the web page be downloaded by direct interaction with a thumbnail in the selective history window. In the embodiment shown in **Figures 13A** and **13B**, the selective history window is resized and repositioned to be accessible in response to a command to cause the retrieving and displaying of the currently downloaded version of the web page. While the user interface shown in **Figures 9A, 9B**, and **9C** also leaves the selective history window available to the user, it is at least partially obscured by the window showing the currently downloaded version of the web page. In the case of the user interface shown in **Figures 13A** and **13B**, the selective history window 753 is moved and resized to create the window 753a to allow it to be shown concurrently with the window 575 which presents the currently downloaded version of the web page represented by the thumbnail 752 shown within the selective history window 753 and 753a. As shown in **Figure 13B**, a close user interface element 755 may be selected by the user to remove the selective history window 753a from the desktop 751. It will be appreciated that other implementations which seek to maintain a presence for the selective history window may employ techniques which are different than that shown in **Figures 13A** and **13B** to keep the selective history window accessible in some form; for example, the selective history window may automatically become a menu accessible from the window 757 or a menu on the desktop 751 in response to the second command (which causes the retrieval and download of the current web page).

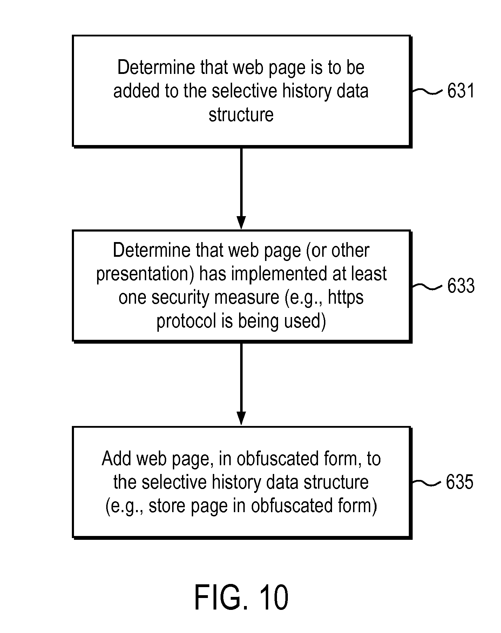

Figure 10 shows a method which may be used in at least certain embodiments of the present invention. This method provides security in those instances when, for example, a thumbnail in the selective history window shows the content of confidential or sensitive information, such as bank information, user account information, etc. Many users often use online banking or online shopping to perform transactions, and web pages from those transactions may end up in the selective history window when they become frequent enough relative to other web pages accessed by the user. In this case, thumbnails of such web pages showing sensitive and/or confidential information may end up in the selective history window. The method shown in **Figure 10** seeks to try to protect that information by obfuscating text or other portions of the web page which has implemented at least one security measure, such as the https protocol. In operation 631, the method determines that a web page is to be added to the selective history data structure and hence can be displayed within a selective history window, such as the selective history window shown in **Figure 3A**. In operation 633, the system determines whether or not the web page has implemented at least one security function or measure. The security measure may be the use of the https protocol, for example. Then in operation 635, the system adds the web page, in obfuscated form, to the selective history data structure. For example, the web page may be stored in an obfuscated form which either blurs text or shows no text or obfuscates the content in other ways. In certain implementations, it may be desirable to obfuscate the entire web page, including the graphics of the web page, rather than just the text. Conventional techniques for blurring or deleting text or other content may be utilized. In addition, in at least certain embodiments, a translucent overlay may be applied as an overlay on top of the obfuscated form of the web page. The translucent overlay may be used to indicate to the user that the system has intentionally obfuscated the page. The overlay may be translucent in order to allow the user to see through the overlay and thereby see the obfuscated page. The translucent overlay may include an image which indicates the confidential or sensitive nature of the web page, such as an image of a lock or an image of a key, etc. In certain alternative embodiments, the system may decide that, rather than add the web page (which uses a security measure) to the selective history data structure, the system intentionally prevents the web page from being added even though the web page meets the criteria for the addition of a web page to the selective history data structure based upon the user's access patterns. It will be appreciated that the method shown in the flow chart of **Figure 10** may be performed in a different order and with more or fewer operations than those shown in **Figure 10**. This is also true of the other flow charts in this disclosure.

**Figure 11** shows a method which may be used in at least certain embodiments of the present invention. In this method, the system attempts to determine whether certain web sites or web pages should be grouped together for the purpose of determining and analyzing the user's access patterns. For example, if some of the web pages are all within the same domain or one web page is a redirection to another web page, then the system may decide that such related web pages or other URLs are to be grouped together for the purpose of analyzing the user's access patterns and also for the purpose of displaying representations of web pages or other presentations. The result of the use of the method shown in **Figure 11** will cause only one web page within a group of related web pages to be shown in a selective history window even though several web pages in that group satisfy the criteria, based on user access patterns, to add all of them to the selective history data structure. The web page which is selected (to represent all the pages in the domain) can be the page with the shortest URL. The use of this method will prevent the selective history data structure that is presented to the user through the selective history window from including too many web pages from the same domain. In this way, the selective history window presents a more diverse group of web pages. It will be appreciated that, in alternative embodiments, this method may not be used and hence multiple web pages from the same domain (e.g. as shown in **Figure 3B**) may appear within the selective history window. In operation 671, the system collects statistics of the URLs visited. In operation 673, the system determines if the URLs are related. For example, if some of the URLs are within the same domain, or one URL redirects to another URL, then they are considered related. The system then, in operation 675, groups the related URLs. An example of related URLs is the following three: yahoo.com, news.yahoo.com and finance.yahoo.com. These three URLs may be considered to be within the same domain (yahoo.com) and hence will be grouped together and treated as a single URL for the purposes of determining whether to add the single URL to the selective history data structure. In operation 677, the system performs an analysis, based on, for example, frequency and other user access patterns. This analysis is performed on the statistics collected in operation 671 to determine whether to add the visited web pages to the selective history data structure. These statistics are modified based upon the groupings determined in operations 673 and 675. A single web page (e.g. the one with the shortest URL) is picked to represent all of the web pages in the same domain which would have appeared in the selective history window.

**Figure 12** shows an example of a user interface which may be used to display either the full history in cover flow view or the selective history, such as the selective history shown in **Figure 3A** in cover flow view. The window 701 includes a series of representations 703-708 shown in a cover flow view. The user may change the positions of the representations by either moving the slider 712 within the region 713 or by using the arrows at the end of the region 713. A list of the representations is shown as list 714 in the bottom portion of the window 701. This list may be scrolled using the scroll control 715 by scrolling within the region 716 or by using the vertical scroll arrows. This allows the user to see the visual aspect of a representation while also seeing other information, such as name, kind, and date within the cover flow view shown in **Figure 12**. The user may also be able to search within the cover flow view by entering a search term into the search entry field 717. In one embodiment, the entire history can be shown in cover flow view or just the selective history determined according to the method of **Figure 4** may be shown in cover flow view.

**Figure 14** relates to another aspect of the present invention in which an indicator is displayed on or associated with a representation to indicate whether or not the representation shows a current view of the web page or other presentation. An example of this indicator is shown as indicator 507 in **Figure 6**. This indicator indicates that the web page has probably changed based upon, in one embodiment, a subscription to a feed or other distribution of data associated with the web page, such as an RSS feed. It will be appreciated that the indicator, when based on an RSS feed, indicates a probability because the web page may in fact have not changed but an RSS associated with the web page has changed; however, in most cases, when an RSS feed for a web page has changed, then the web page typically will also have changed. Hence, it is useful to have this indicator based upon the likelihood that the RSS feed information will accurately predict whether the web page has changed or not. In operation 801, the system determines whether a web page in the selective history data structure has an RSS feed or other data that indicates the content of the page has probably changed. In operation 803, the system subscribes to the RSS feed or other feed of information. This subscription can be performed silently as a background task in the sense that the system does not alert the user to changes in the feed except through the indicator, such as the indicator 507 shown in **Figure 6**. In operation 805, the system determines whether the RSS feed has changed after the date the thumbnail (or other representation) in the selective history data structure was created. In one embodiment, this may involve comparing an article count obtained from the RSS feed at the time of the last visit to the web page was saved in the selective history data structure to a current article count provided by the currently updated RSS feed. In an alternative embodiment which does not rely on an RSS feed, a web site may distribute messages or data which indicate that the content of a web page, from the web site, has changed; in this alternative embodiment, the web site itself provides the data which reliably indicates that the web page has changed.

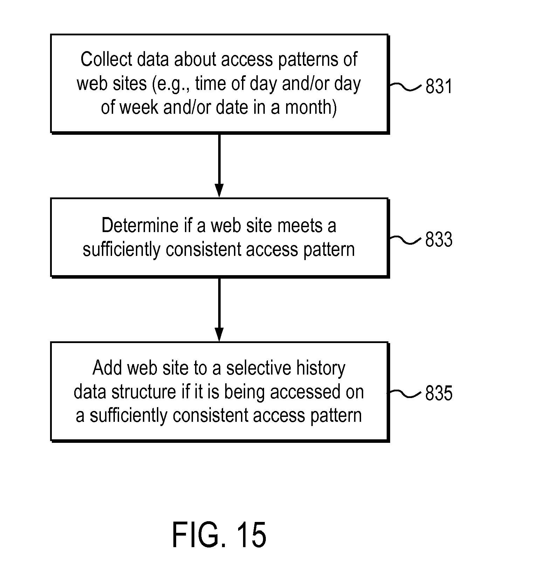

**Figure 15** shows another aspect of the present invention which may be performed in at least certain embodiments of the present invention. This particular aspect allows the system to intelligently decide that a particular web page should be added to the selective history data structure even though it does not satisfy the metrics associated with the analysis of the user's access patterns. For example, if a user accesses a particular web page every Friday night, but the metrics of that web page (e.g. the frequency of the visits to the web page) is lower than the metrics of other web pages automatically selected by the system, the system will nevertheless, given that there is a consistency in the user access pattern for this particular web site, add the web site to the selective history data structure. In a sense, a consistent access pattern, where the access pattern is a pattern in time, can be considered to increase a frequency metric when judging the frequency of visits to that web site relative to other web sites which are not accessed on a consistent basis in time. In operation 831, data is collected about the access patterns of the web sites; this data may include the time of day or the day of the week or the date in a month. For example, if the user accesses an online banking service on a certain day of the month over a period of many months, the system may determine that the user is accessing this particular web site in a sufficiently consistent access pattern. This is determined in operation 833. If the system determines that the access pattern is sufficiently consistent, then, in operation 835, the web site is added to a selective history data structure. In one implementation, a measure of time of access is algorithmically converted into a frequency parameter so that the statistics for the particular web site can be judged entirely based on frequency or other parameters rather than just time itself. Other implementations may use a measure of the consistency of access patterns in time as part of a set of metrics which include frequency in order to decide whether to add the web site to the selective history data structure.

In the foregoing specification, the invention has been described with reference to specific exemplary embodiments thereof. It will be evident that various modifications may be made thereto without departing from the broader spirit and scope of the invention as set forth in the following claims. The specification and drawings are, accordingly, to be regarded in an illustrative sense rather than a restrictive sense.

## Claims

1. A machine readable storage medium storing executable program instructions which when executed by a machine cause the machine to perform a method comprising:
monitoring presentations accessed by a user;
automatically selecting some of the presentations accessed by the user according to, at least in part, the user's access patterns;
displaying representations of the some of the presentations in a pattern of an n x m array, wherein n is greater than 1.

2. The medium as in claim 1 wherein the automatically selecting creates a selective history data structure and wherein the presentations are web pages and wherein the user's access patterns include at least one of: (a) a metric representing a frequency of the user's access to a web page; (b) recency of user's access; (c) amount of user activity on the web page; (d) amount of time spent on the web page; and wherein the representations include thumbnails of a set of the some of the presentations.

3. The medium as in claim 2, wherein the method further comprises:
obfuscating a representation in the some of the presentations if the representation is for a web page which includes a security measure.

4. The medium as in claim 2, wherein the method further comprises:
grouping several web pages within a domain together for determining the user's access patterns.

5. The medium as in claim 2 further comprising:
grouping several web pages involved in a redirection together for determining the user's access patterns.

6. The medium as in claim 2, wherein the method further comprises:
displaying a window containing the representations of the some of the presentations;
displaying resized representations when the window is resized.

7. The medium as in claim 6 wherein the resized representations have a resized aspect ratio which is different than an aspect ratio of the representations.

8. The medium as in claim 2, wherein the method further comprises:
displaying an indicator for a representation of one of the some of the presentations, the indicator indicating that the web page represented by the representation has probably changed.

9. The medium as in claim 8 wherein the indicator is controlled by a subscription to a feed of information.

10. The medium as in claim 9, wherein the feed is compatible with a Really Simple Syndication (RSS) feed.

11. The medium as in claim 2, wherein the method further comprises:
updating automatically, as a background task, the thumbnails of the representations;
displaying the thumbnails, which have been updated by the updating automatically, in response to a user command to display the representations of the some of the presentations.

12. The medium as in claim 2, wherein the method further comprises:
determining whether the user accesses a web page in a consistent access pattern based on the time of accessing;
adding the web page to the selective history data structure without regard to whether the consistent access pattern meets a threshold based on frequency of the user's access to web pages.

13. The medium as in claim 2 wherein the method further comprises:
presenting a user selectable user interface element which when activated makes the representations of the some of the presentations in the n x m array a home page for the user.

14. The medium as in claim 2 wherein n in the pattern of the n x m array is user variable through user control of a user interface element.

15. The medium as in claim 2, wherein the method further comprises:
displaying an enlarged representation of one of the thumbnails in response to receiving a first command to display the enlarged representation;
displaying a currently downloaded version of the web page represented by the one of the thumbnails in response to receiving a second command to download the web page, wherein the first command is different than the second command.

16. The medium as in claim 15, wherein the method further comprises:
displaying a user interface which shows at least a portion of the pattern of the n x m array while concurrently displaying the currently downloaded version of the web page.

17. The medium as in claim 2, wherein the method further comprises:
providing at least one user interface element which allows the user to perform at least one of (a) removing a representation of a web page from the pattern of the n x m array; (b) move a representation of a web page within the pattern of the n x m array; (c) fix a location of a representation of a web page within the pattern of the n x m array; and (d) manually add a new representation to the pattern of the n x m array.

18. The medium as in claim 2, wherein the method further comprises:
providing information, in response to selection of a user command, about the user's access pattern for a particular web page represented in the pattern of the n x m array.

19. The medium as in claim 2, wherein the method further comprises:
displaying in a window the pattern of the n x m array and displaying in the window a user interface element which, when selected, causes a display of a full history of web pages that have been accessed.

20. The method as in claim 19 wherein the full history is displayed in a cover flow view.

21. A data processing system configured with the medium as in any one of claims 1-20.

22. A method performed with a system configured with the medium as in any one of claims 1-20.
